# EUROPEAN PATENT APPLICATION

(11) **EP 3 885 808 A1**
(43) Date of publication of application: **29.09.2021**
(21) Application number: 19887606.2
(22) Date of filing: 14.11.2019
(51) Int. Cl.: G02B 6/42, H04B 10/40

(54) **METHOD AND DEVICE FOR ADJUSTING COUPLING POSITIONS, OPTICAL COMPONENT, STORAGE MEDIUM, AND SINGLE BOARD**

(30) Priority: 19.11.2018 CN 201811378576
(71) Applicant: ZTE Corporation, shenzhen Guangdong 518057 (CN)
(72) Inventor: LI, Changlei, Shenzhen, Guangdong 518057 (CN)
(74) Representative: Ipsilon
(86) International application number: PCT/CN2019/118307
(87) International publication number: WO 2020/103752

(57) **Abstract**

Provides are a method and device for adjusting coupling positions, an optical assembly, a storage medium (14-1), and a single board (14-2). The optical assembly includes: an optical path length adjuster (60; 7-3; 8-6; 9-6; 10-6; 11-6; 12-6; 13-6, 13-9), an optical transmitter (62; 8-2; 9-2; 10-2; 11-2; 12-2; 13-2; 14-3), an optical receiver (64; 7-4; 8-3; 9-3; 10-3; 11-3; 12-3; 13-3, 13-8; 14-4), and an optical assembly housing (66; 8-1; 9-1; 10-1; 11-1; 12-1; 13-1), wherein the optical path length adjuster is configured to adjust a coupling position of the optical transmitter and a coupling position of the optical receiver such that a base of the optical transmitter and a base of the optical receiver are located in the same plane.

## Description

### CROSS-REFERENCE TO RELATED APPLICATION

The present application claims priority from the Chinese patent application No. 201811378576.6 filed with the China Patent Office on November 19, 2018, the entire contents of which are incorporated herein by reference.

### TECHNICAL FIELD

The present disclosure relates to the field of communications, and for example, relates to a method and device for adjusting coupling positions, an optical assembly, a storage medium, and a single board.

### BACKGROUND

In passive optical network communication products, the optical assembly is an important functional device that performs functions including optical-to-electrical signal conversion, electrical-to-optical signal conversion and signal transceiving. Based on the number of the transceived optical signals and whether the transceived optical signals share the same fiber, optical assemblies can be classified into a single-fiber unidirectional type, a single-fiber bidirectional type, a single-fiber three-way type, single-fiber four-way type and the like, among which the optical assembly of the single-fiber bidirectional type is most widely used.

In the traditional passive optical network terminal devices, optical assemblies are applied in the form of optical modules. However, with the scale deployment of passive optical networks and in order to alleviate the increasingly heavy cost pressure, optical assembly on-board designs have been substituted for the optical modules to become the main application form of the optical assemblies in the passive optical network terminal devices. However, no effective technical solution has been proposed yet aiming at the problems of residual pins and extra signal loss brought by on-board design of single-fiber bidirectional optical assembly with a connection mode of pin-direct connection (direct connection by pins), and the problems of increased cost and reduced production efficiency brought by an extra positioning structure required in an on-board connection when a flexible circuit board is used to reduce the extra signal loss in the related art.

### SUMMARY

Embodiments of the present disclosure provide a method and device for adjusting coupling positions, an optical assembly, a storage medium, and a single board that can solve at least the problems of residual pins and extra signal loss brought by on-board design of the single-fiber bidirectional optical assembly by the connection mode of pin-direct connection, and the problems of increased cost and reduced production efficiency brought by an extra positioning structure required in the on-board connection when a flexible circuit board is used to reduce the extra signal loss in the related art.

According to an embodiment of the disclosure, there is provided an optical assembly, including: an optical path length adjuster, an optical transmitter, an optical receiver, and an optical assembly housing, wherein
the optical path length adjuster is configured to adjust a coupling position of the optical transmitter and a coupling position of the optical receiver such that a base of the optical transmitter and a base of the optical receiver are located in the same plane, and signal pins of the optical transmitter and the optical receiver are both oriented in a direction perpendicular to the plane.

According to another embodiment of the disclosure, there is provided a method for adjusting coupling positions, including: adjusting, by an optical path length adjuster, a coupling position of the optical transmitter and a coupling position of the optical receiver such that a base of the optical transmitter and a base of the optical receiver are located in the same plane, and signal pins of the optical transmitter and the optical receiver are both oriented in a direction perpendicular to the plane; wherein the optical path length adjuster is disposed in an optical assembly, and the optical assembly further includes the optical transmitter and the optical receiver.

According to another embodiment of the disclosure, there is provided a device for adjusting coupling positions, including: an adjusting module configured to adjust a coupling position of the optical transmitter and a coupling position of the optical receiver such that a base of the optical transmitter and a base of the optical receiver are located in the same plane, and signal pins of the optical transmitter and the optical receiver are both oriented in a direction perpendicular to the plane; wherein the optical path length adjuster is disposed in an optical assembly, and the optical assembly further includes the optical transmitter and the optical receiver.

According to another embodiment of the disclosure, there is provided a storage medium having a computer program stored thereon, wherein the computer program is configured to be executed to cause the method for determining coupling positions according to any one of the above embodiments to be implemented.

According to another embodiment of the disclosure, there is provided a single board connected to the optical assembly according to any one of the above embodiments.

### BRIEF DESCRIPTION OF THE DRAWINGS

The drawings described herein are intended to provide a further understanding of the present disclosure, and are intended to be a part of the present disclosure. The exemplary embodiments of the present disclosure and the description thereof are for explaining the present disclosure and do not constitute an undue limitation of the present disclosure. In the drawings:
FIG. 1 is a schematic structural diagram of a single-fiber bidirectional optical assembly in the related art;
FIG. 2 is a schematic structural diagram of a single-fiber three-way optical assembly in the related art;
FIG. 3 is a schematic structural diagram of a single-fiber four-way optical assembly in the related art;
FIG. 4 is a diagram showing the effect of an on-board design in which a single-fiber bidirectional optical assembly adopts a connection mode of pin-direct connection in the related art;
FIG. 5 is a diagram showing the effect of an on-board design in which a single-fiber bidirectional optical assembly is connected by a flexible circuit board in the related art;
FIG. 6 is a block diagram of an optical assembly according to an embodiment of the present disclosure;
FIG. 7 is a flowchart of a method for adjusting coupling positions according to an embodiment of the present disclosure;
FIG. 8 is a block diagram of a device for adjusting coupling positions according to an embodiment of the present disclosure;
FIG. 9 is a schematic structural diagram of a single-fiber bidirectional optical assembly according to an optional embodiment of the present disclosure;
FIG. 10 is a schematic diagram showing the implementation effect of an optical path length adjuster according to an optional embodiment of the present disclosure;
FIG. 11 is a schematic structural diagram of another single-fiber bidirectional optical assembly according to an optional embodiment of the present disclosure;
FIG. 12 is a schematic structural diagram of still another single-fiber bidirectional optical assembly according to an optional embodiment of the present disclosure;
FIG. 13 is a schematic structural diagram of yet another single-fiber bidirectional optical assembly according to an optional embodiment of the present disclosure;
FIG. 14 is a schematic structural diagram of a single-fiber three-way optical assembly according to an optional embodiment of the present disclosure;
FIG. 15 is a schematic diagram showing the effect of an on-board design of single-fiber bidirectional optical assembly according to an optional embodiment of the present disclosure;
FIG. 16 is a schematic structural diagram of another single-fiber three-way optical assembly according to an optional embodiment of the present disclosure; and
FIG. 17 is a schematic diagram showing connection for an on-board design of single-fiber bidirectional optical assembly according to an optional embodiment of the present disclosure.

### DETAILED DESCRIPTION

The disclosure will be described in detail below with reference to the drawings in conjunction with the embodiments. The embodiments of this disclosure and features in the embodiments may be combined with each other in any manner as long as they are not contradictory.

The terms "first", "second", and the like in the description, claims and drawings of the disclosure are used for the purpose of distinguishing similar objects instead of indicating a specific order or sequence.

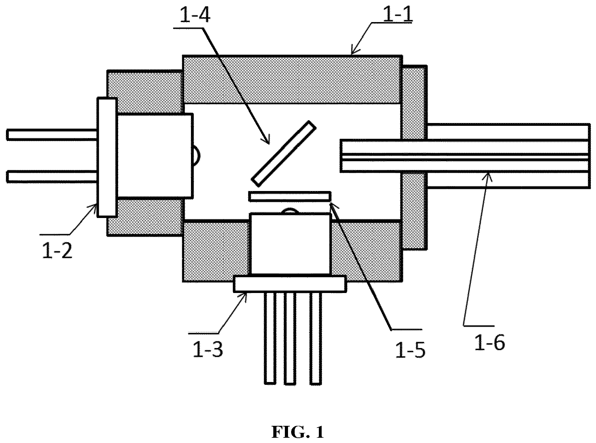

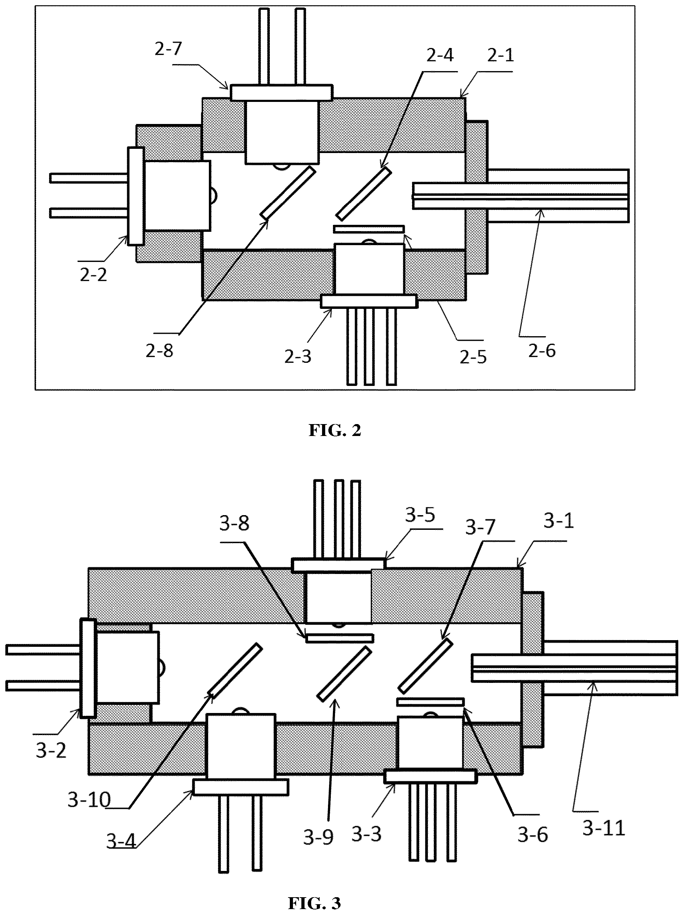

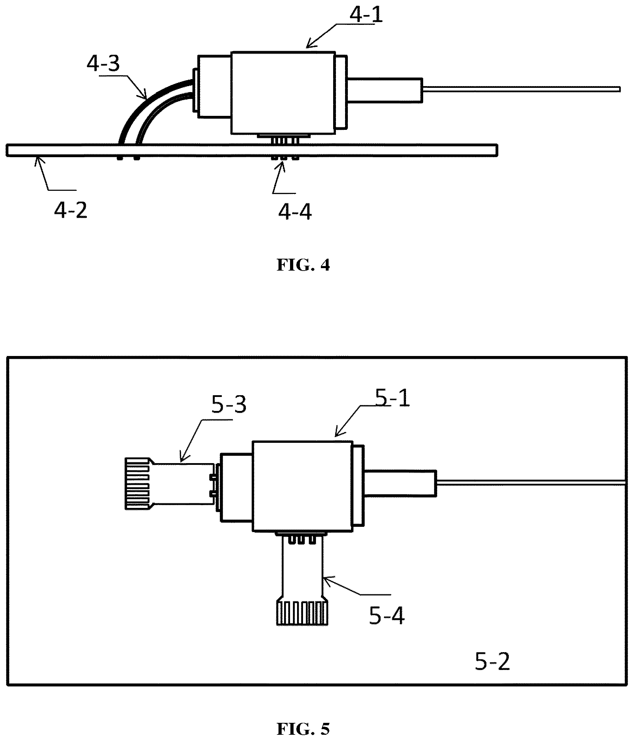

FIG. 1 is a schematic diagram of the basic structure of a single-fiber bidirectional optical assembly, FIG. 2 is a schematic diagram of the basic structure of a single-fiber three-way optical assembly, FIG. 3 is a schematic diagram of the basic structure of a single-fiber four-way optical assembly, and FIG. 4 is a schematic diagram showing an on-board design form in which a single-fiber bidirectional optical assembly adopts a connection mode of pin-direct connection.

As shown in FIG. 1, the single-fiber bidirectional optical assembly includes an optical assembly housing 1-1, an optical transmitter 1-2, an optical receiver 1-3, a beam splitting filter 1-4, a receiving filter 1-5, an optical fiber ferrule 1-6, etc. As shown in FIG. 4, during on-board design of the optical assembly, the optical assembly is connected to a single board in the mode of pin-direct connection. That is, the optical assembly is directly connected to a single board 4-2 via an optical transmit signal pin 4-3 and an optical receive signal pin 4-4.

As shown in FIG. 1, since the optical transmitter 1-2 and the optical receiver 1-3 are located on two surfaces of the optical assembly perpendicular to each other, when the on-board design of optical assembly adopts the connection mode of pin-direct connection, the optical receive signal pin is in a connection form of on-board straight insertion (on-board in-line), while the transmit signal pin is in a connection form of large-angle bending, as shown in FIG. 4. In a low-speed passive optical network, such as Gigabit-Capable Passive Optical Network (GPON), terminal device, such a product form is feasible and has been commercialized in a large scale, but in a high-speed passive optical network, such as 10G GPON, terminal device, since the transmission pin is long, the loss of high-frequency signals at the transmitting end is high, and the quality of the transmitted signals is seriously degraded, the transmission performance of the product will be greatly influenced, and the transmission performance requirements of the passive optical network cannot be met. Therefore, such connection form cannot be used in the high-speed passive optical network terminal device.

Considering that the high loss of high-frequency signals at the transmitting end is because the length of the transmit signal pin is too long, it is possible to borrow ideas from the structural form of the single-fiber four-way optical assembly used in the optical module shown in FIG. 3. The optical transmitter and the optical receiver are packaged on the same surface of the optical assembly housing so that the optical transmitter and the optical receiver may be both connected to the single board in the form of straight insertion of pins. FIG. 3 shows a basic form of a single-fiber four-way optical assembly, which includes an optical assembly housing 3-1, a first optical transmitter 3-2, a first optical receiver 3-3, a second optical transmitter 3-4, a second optical receiver 3-5, a first receiving filter 3-6, a first beam splitting filter 3-7, a second receiving filter 3-8, a second beam splitting filter 3-9, a third beam splitting filter 3-10, and an optical fiber ferrule 3-11, wherein the second optical transmitter 3-4 and the first optical receiver 3-3 are located on the same surface of the optical assembly housing. Although by borrowing ideas from this structure, the optical transmitter and the optical receiver may both be connected to the single board directly by pins (in the form of straight insertion of pins), since focusing lenses of the optical transmitter and the optical receiver both have tolerances, when optical coupling is carried out, it cannot be guaranteed that the base of the optical transmitter and the base of the optical receiver are in the same plane, which means that extra residues of signal pins of the optical transmitter or the optical receiver are left on the single board, which will still cause high loss of high-frequency signals and influence the signal quality. Therefore, during the on-board design of such optical assemblies, only low-speed signals can be directly connected to the single board, while high-speed signals need a connection mode using flexible circuit board to avoid extra loss, leading to reduced production efficiency. FIG. 5 is a schematic diagram of an on-board connection of a single-fiber bidirectional optical assembly via a flexible circuit board, in which an optical assembly 5-1 is connected to a single board 5-2 through a transmission flexible circuit board 5-3 and a reception flexible circuit board 5-4. Compared with the traditional connection mode of pin-direct connection, the flexible circuit board has shorter signal trace, and the signal trace on the flexible board has a relatively small inductive reactance, so that the signal loss is low, and the signal quality is obviously improved and the requirement on the transmission performance may be met. However, the flexible circuit board is made of a flexible material and therefore cannot fix the optical assembly like the pin-direct connection mode. As a result, an extra design of a positioning structure for the optical assembly is required, and meanwhile, additional processes are required for positioning the flexible circuit board, positioning and fixing the optical assembly during production of the product, which increase the production processes, reduce the production efficiency, and finally increase the cost.

FIG. 4 is a diagram showing the effect of an on-board design in which a single-fiber bidirectional optical assembly adopts a connection mode of pin-direct connection in the related art, wherein 4-1 is an optical assembly housing, 4-2 is a single board, 4-3 is an optical transmitter electrical signal pin, and 4-4 is an optical receiver electrical signal pin. A base of the optical receiver is directly attached to the single board so that there is no extra residues of electrical signal pins. However, since the optical transmitter and the single board are perpendicular to each other, and the optical transmitter is at a certain height from the single board, the optical transmitter electrical signal pin will leave a long residue on the board, causing high loss in the transmission of electrical signals, and seriously affect the signal quality when transferring high-speed electrical signals.

In order to solve the problem of transmission signal loss in the on-board design of single-fiber bidirectional optical assembly in the related art, the related art uses a flexible circuit board for connection. FIG. 5 is a diagram showing the effect of an on-board design of a single-fiber bidirectional optical assembly using a flexible circuit board, in which 5-1 is an optical assembly, 5-2 is a single board, 5-3 is an optical transmitter flexible circuit board, and 5-4 is an optical receiver flexible circuit board. Compared with the connection mode of pin-direct connection, the optical transmitter electrical signal pin has a significantly reduced length, and the signal trace on the flexible board has a relatively small inductive reactance, so that the signal loss is low; and therefore, compared with the connection mode of pin-direct connection, the connection by flexible circuit board notably improve the quality of the transmitted electrical signal.

However, since the flexible circuit board is flexible, the flexible circuit cannot fix the optical assembly or position itself, therefore, an additional fixing device is required to fix the optical assembly and an additional positioning device is required to weld and position the flexible circuit board, which requires additional operation processes during the production, and will significantly reduce the production efficiency.

In order to solve the problem of extra signal loss brought by the extra residual pins in the on-board connection of single-fiber bidirectional optical assembly by pin-direct connection, and to avoid the problems of increased cost and reduced production efficiency brought by the extra positioning structure required in board connection when a flexible circuit board is used to reduce the extra signal loss in the related art, the present disclosure provides the following technical solutions: a method and device for adjusting coupling positions, an optical assembly, a storage medium, and a single board.

### Embodiment 1

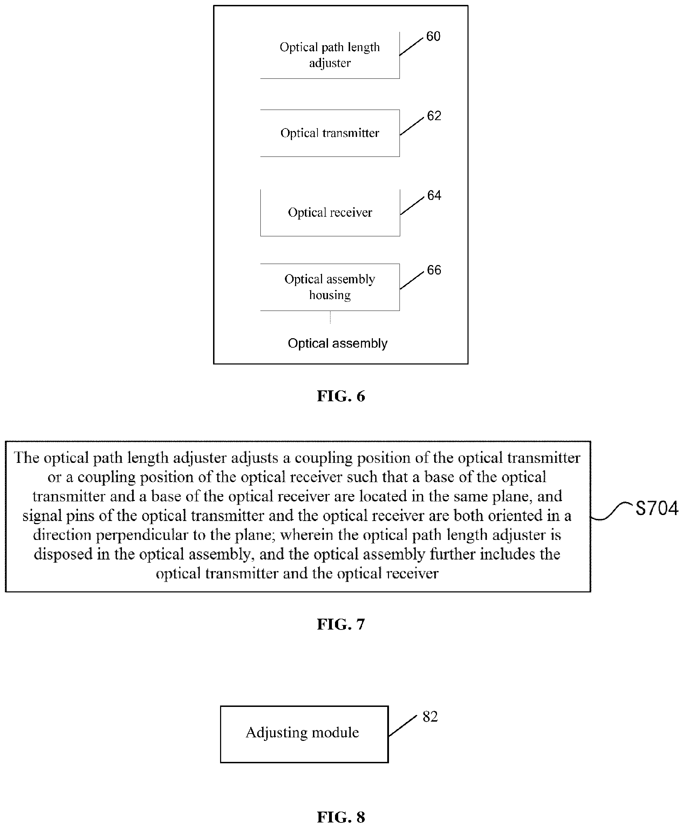

In the embodiment of the present disclosure, there is provided an optical assembly. FIG. 6 is block diagram of an optical assembly according to an embodiment of the present disclosure. As shown in FIG. 6, the optical assembly includes: an optical path length adjuster 60, an optical transmitter 62, an optical receiver 64, and an optical assembly housing 66.

The optical path length adjuster 60 is configured to adjust a coupling position of the optical transmitter and a coupling position of the optical receiver such that a base of the optical transmitter and a base of the optical receiver are located in the same plane, and signal pins of the optical transmitter and the optical receiver are both oriented in a direction perpendicular to the plane.

According to the above technical solution, an optical path length adjuster is provided in the optical assembly to adjust a coupling position of the optical transmitter and a coupling position of the optical receiver such that a base of the optical transmitter and a base of the optical receiver are located in the same plane, and signal pins of the optical transmitter and the optical receiver are both oriented in a direction perpendicular to the plane, which solution, compared with the solution using a flexible circuit board, shortens the pin lengths of the optical transmitter and the optical receiver, reduces the signal loss and improves the signal quality; and, with the optical assembly fixed by welding the pins, no extra positioning and fixing structures or processes are required, thereby reducing the complexity of production, improving the production efficiency, and finally achieving the purpose of cost reduction.

A position of the optical path length adjuster in the optical assembly may include:
a position in a perpendicular direction of the optical fiber ferrule between the beam splitting filter and the optical receiver;
a position in a perpendicular direction of the optical fiber ferrule between the reflective filter and the optical transmitter; and
a position in an axial direction to the optical fiber ferrule between the reflective filter and the beam splitting filter;
wherein both the beam splitting filter and the reflective filter are located in the axial direction of the optical fiber ferrule and form a preset angle (e.g., 45°) with the axis of the optical fiber ferrule. The beam splitting filter, the reflective filter and the optical fiber ferrule are all components in the optical assembly, and the positions of the beam splitting filter, the reflective filter and the optical fiber ferrule in the optical assembly are well known to those skilled in the art.

The optical path length adjuster discussed in the above embodiment satisfies at least one of the following conditions: the optical path length adjuster has a refractive index larger than that of a gas in an interior space of the optical assembly; the optical path length adjuster has a high transmittance; the optical path length adjuster is a planar structure; and in an embodiment, the optical path length adjuster is made of a Si material.

According to the above technical solution, the optical transmitter and the optical receiver are located in the same plane of the optical assembly, and the direction of each electrical or optical signal pin is perpendicular to said plane; and by adjusting the optical path of the optical signal through the optical path length adjuster, bases of the optical receiver and the optical transmitter are located in the same plane. With this solution, the optical transmitter and the optical receiver may be designed on-board through the connection mode of pin-direct connection, bases of the optical transmitter and the optical receiver may both be closely attached to the single board, leaving no extra residual signal pin and involving no extra signal loss; and at the same time, the optical assembly is fixed by directly welding the electrical signal pin to the single board, which notably improves the production efficiency compared with the connection by a flexible circuit board.

### Embodiment 2

In this embodiment, there is provided a method for adjusting coupling positions. FIG. 7 is flowchart of a method for adjusting coupling positions according to the embodiment of the present disclosure. As shown in FIG. 7, the flow includes the following step S704.

At step 704, the optical path length adjuster adjusts a coupling position of the optical transmitter or a coupling position of the optical receiver such that a base of the optical transmitter and a base of the optical receiver are located in the same plane, and signal pins of the optical transmitter and the optical receiver are both oriented in a direction perpendicular to the plane;
wherein the optical path length adjuster is disposed inside the optical assembly, and the optical assembly further includes the optical transmitter and the optical receiver.

According to the above technical solution, an optical path length adjuster is provided inside the optical assembly to adjust a coupling position of the optical transmitter or a coupling position of the optical receiver such that a base of the optical transmitter and a base of the optical receiver are located in the same plane, and signal pins of the optical transmitter and the optical receiver are both oriented in a direction perpendicular to the plane, which solution, compared with the solution using a flexible circuit board, shortens the pin lengths of the optical transmitter and the optical receiver, reduces the signal loss and improves the signal quality; and, with the optical assembly fixed by welding the pins, no extra positioning and fixing structures or processes are required, thereby reducing the complexity of production, improving the production efficiency, and finally achieving the purpose of cost reduction.

The step S704 may be implemented in various manners, and in an optional embodiment, step S704 may be implemented by the following technical solution:
The optical path length adjuster adjusts an angle at which a light beam passes through the optical path length adjuster, wherein the coupling position of the optical transmitter or the coupling position of the optical receiver are adjusted by adjusting the angle.

Regarding the position where the optical path length adjuster is disposed inside the optical assembly, at least one of the following is included:
the optical path length adjuster is disposed between the beam splitting filter and the optical receiver of the optical assembly and is located in a perpendicular direction of the optical fiber ferrule;
the optical path length adjuster is disposed between the reflective filter and the optical transmitter of the optical assembly and is located in the perpendicular direction of the optical fiber ferrule; and
the optical path length adjuster is disposed between the reflective filter and the beam splitting filter of the optical assembly and is located in an axial direction of the optical fiber ferrule;
wherein both the beam splitting filter and the reflective filter are located in the axial direction of the optical fiber ferrule and form a preset angle with an axis of the optical fiber ferrule.

In summary, applying the optical path length adjuster to adjust a divergence angle of the emitted or received light inside the optical assembly during transmission of the emitted or received light within the optical path length adjuster so that the light output path is deviated, and finally a focusing position of the light beam is changed, thereby achieving adjustments of the coupling position of the optical transmitter or receiver, and finally causing the bases of the optical transmitter and the optical receiver to be in the same plane.

Through the description of the above implementations, those skilled in the art can clearly understand that the method according to the above embodiment may be implemented by means of software plus a general hardware platform, or may be implemented by hardware. Based on such understanding, the technical solutions of the present invention essentially or, in other words, a part thereof contributing to the related art, can be embodied in a form of a software product, wherein the software product is stored in a storage medium (such as an ROM/RAM, a disk, or an optical disc) and includes a number of instructions to make a terminal device (which may be a mobile phone, a computer, a server, or a network device, etc.) to execute the methods of the various embodiments of the present disclosure.

### Embodiment 3

In this embodiment, there is further provided a device for adjusting coupling positions. The device is configured to implement the above embodiments and optional implementations. Details which have been explained will not be repeated here. As used herein, the term "module" may be a combination of software and /or hardware that can realize a preset function. Although the device described in the following embodiment may be implemented in software, hardware, or a combination of software and hardware, is also possible and contemplated.

FIG. 8 is a block diagram of a device for adjusting coupling positions according to an embodiment of the present disclosure. As shown in FIG. 8, the device includes:
an adjusting module 82 which is configured to adjust a coupling position of the optical transmitter and a coupling position of the optical receiver such that a base of the optical transmitter and a base of the optical receiver are located in the same plane, and signal pins of the optical transmitter and the optical receiver are both oriented in a direction perpendicular to the plane; wherein the optical path length adjuster is disposed inside an optical assembly, and the optical assembly further includes the optical transmitter and the optical receiver.

According to the above technical solution, an optical path length adjuster is provided in the optical assembly to adjust a coupling position of the optical transmitter and a coupling position of the optical receiver such that a base of the optical transmitter and a base of the optical receiver are located in the same plane, and signal pins of the optical transmitter and the optical receiver are both oriented in a direction perpendicular to the plane, which solution, compared with the solution using a flexible circuit board, shortens the pin lengths of the optical transmitter and the optical receiver, reduces the signal loss and improves the signal quality, and, with the optical assembly fixed by welding the pins, no extra positioning and fixing structures or processes are required, thereby reducing the complexity of production, improving the production efficiency, and finally achieving the purpose of cost reduction.

Optionally, the adjusting module 82 is configured to adjust an angle at which a light beam passes through the optical path length adjuster, wherein the coupling position of the optical transmitter and the coupling position of the optical receiver are adjusted by adjusting the angle.

In an embodiment of the present disclosure, the optical path length adjuster is configured as at least one of:
the optical path length adjuster is disposed between the beam splitting filter and the optical receiver of the optical assembly and is located in a perpendicular direction of the optical fiber ferrule;
the optical path length adjuster is disposed between the reflective filter and the optical transmitter of the optical assembly and is located in the perpendicular direction of the optical fiber ferrule; and
the optical path length adjuster is disposed between the reflective filter and the beam splitting filter of the optical assembly and is located in an axial direction of the optical fiber ferrule;
wherein both the beam splitting filter and the reflective filter are located in the axial direction of the optical fiber ferrule and form a preset angle with an axis of the optical fiber ferrule.

### Embodiment 4

In this embodiment of the present disclosure, there is further provided a single board configured to be connected to the optical assembly of Embodiment 1.

The technical solutions of the above Embodiments 1 to 4 may be used either in combination or alone.

The following describes the above technical solutions with reference to optional embodiments, but the technical solutions of the embodiments of the present disclosure are not limited thereto.

According to the present disclosure, an optical path length adjuster is provided in the optical assembly to adjust the coupling position of the optical transmitter or receiver, which finally causes the bases of the optical transmitter and the optical receiver to be in the same plane, and in turn solves the problem of extra signal loss brought by the extra residual pins in the on-board connection of single-fiber bidirectional optical assembly, avoids the problems of increased cost and reduced production efficiency brought by the extra positioning structure required in board connection when a flexible circuit board is used to reduce the extra signal loss in the related art. Therefore, the connection between the optical assembly and the single board may be implemented without any extra positioning structure, the bases of the optical transmitter and the optical receiver are located in the same plane, and there is no residual signal pin and no extra signal loss.

### Optional embodiment 1

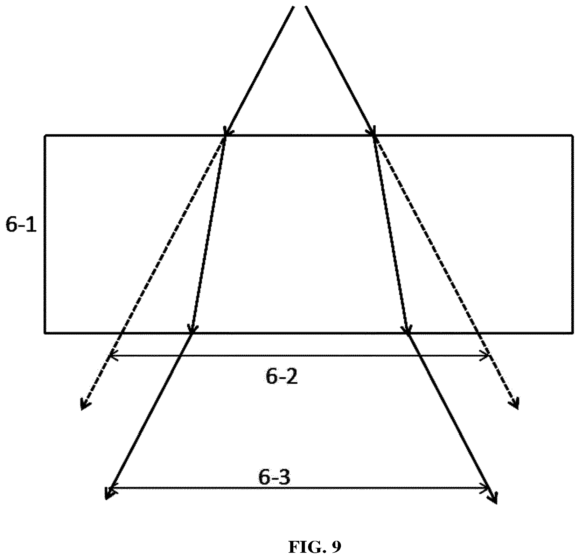

FIGs. 9, 10 and 11 are schematic diagrams showing the operation principle of the optical path length adjuster and the design method of the optical assembly according to the present disclosure.

As shown in FIG. 9, the operation principle of the optical path length adjuster provided in the optional embodiment of the present disclosure is explained here taking the operation process of divergent light as an example; the operation process of convergent light can be deduced by analogy. Wherein, reference 6-1 denotes an optical path length adjuster. Optionally, the optical path length adjuster is a planar structure, and is made of a high-transmittance material having a refractive index greater than 1. In this implementation, the optical path length adjuster has a refractive index larger than that of the gas inside the optical assembly, and is made of a Si material; while in practical applications, the optical path length adjuster may have a refractive index either greater or smaller than that of the gas inside the optical assembly, and the operation process thereof are similar.

As indicated by the solid line in FIG. 9, a bundle of divergent light passes through an actual transmission path of the optical path length adjuster. The dotted line is the assumed transmission path of the divergent light without the optical path length adjuster. The divergent light is refracted when entering the optical path length adjuster, and according to the refraction principle, a divergence angle of the light beam is reduced inside the optical path length adjuster because the refractive index of the optical path length adjuster is greater than that of the gas in the optical assembly, and then resumed to the original angle for further transmission after the divergent light exits the optical path length adjuster.

According to the principle of the optical assembly, the divergent light reaching a receiving part will be focused through a lens before finally being detected and received; and in practical production, the required focusing effect is achieved by adjusting the position of the optical receiver. This process may be called coupling of the optical receiver, and the finally determined position of the optical receiver is called the coupling position of the optical receiver.

According to the focusing principle of the divergent light, in case of the same divergence angle, in order to achieve the same focusing effect, the energy distribution of divergent light on the lens should be the same. To put it simple, the divergent light should have the same projection area on the lens. Therefore, assuming that the required transmission area is the size shown by the double-headed arrows 6-2 and 6-3, the optical path of the divergent light is relatively longer in the presence of the optical path length adjuster, and thus, the coupling position of the optical receiver may be further away.

In view of the above description of the operation process, the optical path length adjuster can adjust the optical path length of the light beam required to reach the same transmission area by changing the transmission angle of the light beam passing through the optical path length adjuster, so as to adjust the coupling position of the optical receiver. It is based on this function that this functional device is named as an optical path length adjuster in the embodiments and optional embodiments of the present disclosure, but it is not limited thereto.

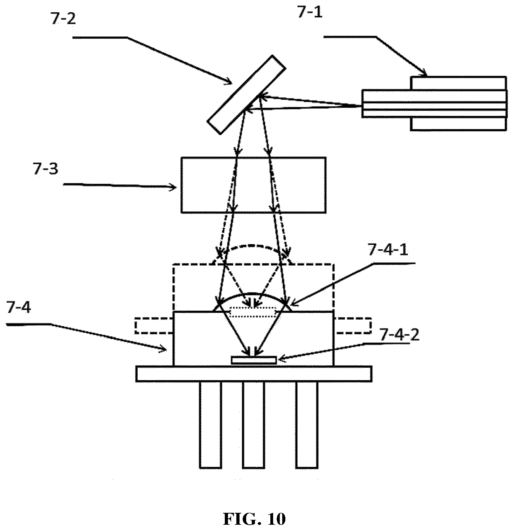

FIG. 10 shows the operation principle of the optical path length adjuster provided in the present disclosure in the optical assembly design. Here, the solution in which the optical path length adjuster adjusts the coupling position of the optical receiver is taken as an example for explanation. The method for adjusting the coupling position of the optical transmitter is similar and easy for those skilled in the art, and thus is not described in detail here. To explain the function and design points of the optical path length adjuster in detail, the transmission process of the emitted light in the optical assembly, which can be easily understood by those skilled in the art, is omitted here, and the omission of this process does not affect the understanding of the disclosed design method. As shown in FIG. 10, reference 7-1 denotes an optical fiber ferrule, 7-2 denotes a beam splitting filter, 7-3 denotes an optical path length adjuster, 7-4 denotes an optical receiver, 7-4-1 denotes a convergent lens of the optical receiver, and 7-4-2 denotes an optical detector of the optical receiver. In FIG. 10, the solid line indicates the transmission process of the received light in the presence of the optical path length adjuster, and the dotted line indicates the transmission process of the received light without the optical path length adjuster. The received light transmitted to the inside of the optical assembly from the optical fiber ferrule 7-1 is reflected by the beam splitting filter 7-2 and the transmission direction of the light is deflected by 90°, and then the light enters the optical path length adjuster 7-3 to be refracted. Since the refractive index of the optical path length adjuster is greater than that of the gas in the optical assembly, according to the refraction principle, the divergence angle of the light beam is reduced in the optical path length adjuster, and then resumed to the original divergence angle after the light exits the optical path length adjuster, and the light is finally converged onto the optical detector 7-4-2 through the focusing lens 7-4-1 of the optical receiver and converted into an electrical signal. According to the operation process of the optical path length adjuster shown in FIG. 9, without the optical path length adjuster, the received light would be transmitted according to the original divergence angle, and the transmission path is shown by the dotted line. In order to get the received light converged on the optical detector, an actual position of the optical receiver would be closer to the beam splitting filter, as indicated by the dotted line. It can be seen that the optical path length adjuster has a function of adjusting the coupling position of the optical receiver, and according to this adjustment principle, different thicknesses of optical path length adjusters have different adjustment distances for the coupling position of the optical receiver. For optical path length adjusters of the same material, the thicker the optical path length adjuster is, the farther the coupling position of the optical receiver will be.

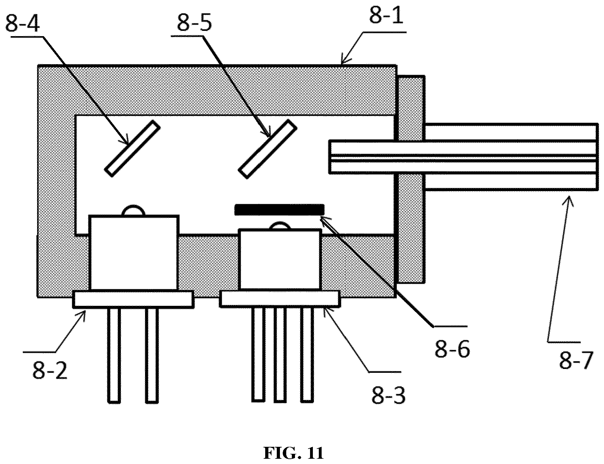

FIG. 11 is a schematic diagram of an optical assembly design method provided in an optional embodiment of the present disclosure, in which an optical assembly structure includes an optical assembly housing 8-1, an optical transmitter 8-2, an optical receiver 8-3, a reflective filter 8-4, a beam splitting filter 8-5, an optical path length adjuster 8-6 and an optical fiber ferrule 8-7. This optical assembly structure is merely a basic structure adopted in the optical assembly design method of the present disclosure, and in fact, other devices may be incorporated in the optical assembly to implement more functions.

The optical transmitter 8-2 includes therein an electrical signal pin, a laser chip, a focusing lens, etc., which are configured to convert a transmitted electrical signal into an optical signal and transmit the optical signal. The laser chip in the optical transmitter 8-2 converts an electrical signal into an optical signal, which is converged through the focusing lens and transmitted to the reflective filter 8-4 to be reflected and deflected by 90° in the transmission direction. The reflected light transmission direction is parallel to an axial direction of the optical fiber ferrule 8-7, and the emitted light is transmitted to the beam splitting filter 8-5 for transmission, and then further transmitted and converged on the optical fiber ferrule 8-7, before finally getting out of the optical assembly.

The optical receiver 8-3 includes therein an electrical signal pin, an optical detector chip, an electrical signal amplifier and a focusing lens, which are configured to convert a received optical signal from the outside into a received electrical signal and transmit the received electrical signal. The received light entering the interior of the optical assembly through the optical fiber ferrule 8-7 is transmitted to the beam splitting filter 8-5 to be reflected and deflected by 90° in the light transmission direction. The reflected received light, after being adjusted by the optical path length adjuster in the optical path and converged by the lens of the optical receiver, is absorbed by the optical detector and converted into a received electrical signal which, after being amplified by the electrical signal amplifier, is transmitted out of the optical assembly via the electrical signal pin.

In design of the optical assembly, in order to guarantee the coupling efficiency of the emitted light, a position of the optical transmitter for converging the emitted light into the optical transmitter in the optical fiber ferrule is calculated and determined according to the maximum and minimum focal lengths of the focusing lens of the optical transmitter and the position of the optical fiber ferrule. Since the bases of the optical transmitter and the optical receiver are located in the same plane, the position of the optical receiver on the optical assembly is also indirectly determined. In order to converge the received light onto the optical detector in the optical receiver, the optical path of the received light to be adjusted is determined according to the focal length of the focusing lens of the optical receiver, the position of the optical receiver and the position of the optical fiber ferrule, thereby determining the required thickness of the optical path length adjuster.

### Optional embodiment 2

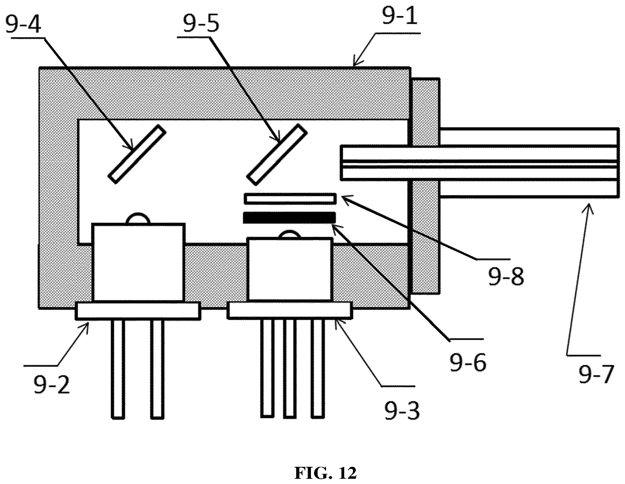

FIG. 12 shows one implementation of the single-fiber bidirectional optical assembly provided by the present disclosure, which includes an optical assembly housing 9-1, an optical transmitter 9-2, an optical receiver 9-3, a reflective filter 9-4, a beam splitting filter 9-5, an optical path length adjuster 9-6 and an optical fiber ferrule 9-7. In order to isolate interference of external interference light on the received signal to achieve a better receiving effect, the implementation of the present disclosure may further include a receiving filter 9-8. The optical transmitter 9-2, the optical receiver 9-3, the reflective filter 9-4, the beam splitting filter 9-5, the optical path length adjuster 9-6, the optical fiber ferrule 9-7 and the receiving filter 9-8 are all packaged inside the optical assembly housing 9-1.

One plane of the optical assembly housing 9-1 is provided with two holes, while another plane is provided with one opening, and four brackets are further provided inside the optical assembly housing 9-1. The optical transmitter 9-2 and the optical receiver 9-3 are respectively fixed in the two holes, the optical fiber ferrule 9-7 is fixed at the opening, and the reflective filter 9-4, the beam splitting filter 9-5, the optical path length adjuster 9-6 and the receiving filter 9-8 are respectively fixed on the four brackets.

The optical transmitter 9-2 and the optical receiver 9-3 are fixed in the same plane of the optical assembly housing 9-1, and electrical signal pins of the optical transmitter 9-2 and the optical receiver 9-3 are both oriented in a direction perpendicular to said plane of the assembly. Optionally, both the optical transmitter and the optical receiver may be fixed by laser welding or by gluing. In addition, since the optical transmitter is more sensitive to position offset than the optical receiver, in an embodiment, the optical transmitter 9-2 is fixed by laser welding, and the optical receiver 9-3 is fixed by gluing. In this manner, it is ensured that displacement of the optical transmitter and the optical receiver will not significantly affect the coupling efficiency, and that the fixing cost of the optical transmitter and the optical receiver is low.

Optionally, the optical transmitter 9-2 may be 1270LDTO, i.e., a Transistor Outline (TO) packaged semiconductor laser with a wavelength of 1270nm, and the optical receiver 9-3 may be 1577PDTO, i.e., a TO packaged semiconductor optical detector with a wavelength of 1577 nm.

The reflective filter 9-4 and the beam splitting filter 9-5 are positioned in an axial direction of the optical fiber ferrule 9-7, and the receiving filter 9-8 is positioned in a perpendicular direction of the optical fiber ferrule 9-7. Optionally, in order to achieve a better packaging effect, each of the reflective filter 9-4 and the beam splitting filter 9-5 forms an angle of 45° with the axis of the optical fiber ferrule, and the receiving filter 9-8 forms an angle of 90° with the perpendicular direction of the optical fiber ferrule. The two angles may be changed accordingly to adapt to different package shapes of the optical assembly.

The reflective filter 9-4 is configured to reflect the emitted light so that the transmission direction of the emitted light is deflected by 90° to be parallel to the axial direction of the optical fiber ferrule. The beam splitting filter 9-5 is configured to transmit the emitted light and reflect the received light. The receiving filter 9-6 is configured to transmit the desired received light and reflect interfere light of other wavelengths. Optionally, the reflective filter 9-4, the beam splitting filter 9-5 and the receiving filter 9-8 are all thin film filters.

The optical path length adjuster 9-6 is located in the perpendicular direction of the optical fiber ferrule 9-7. Optionally, the optical path length adjuster 9-6 forms an angle of 90° with the perpendicular direction of the optical fiber ferrule 9-7, and in an embodiment, this angle may be changed accordingly to adapt to different package shapes of the optical assembly. The optical path length adjuster is made of a high-transmittance material having a refractive index greater than 1. Optionally, in this implementation, the optical path length adjuster is made of a Si material.

The optical transmitter 9-2 includes an electrical signal pin, a laser chip and a focusing lens, therein, which are configured to convert a transmitted electrical signal into an optical signal and transmit the optical signal. Optionally, the optical transmitter is packaged by TO-CAN.

The laser chip in the optical transmitter 9-2 converts an electrical signal into an optical signal, which is converged through the focusing lens and transmitted to the reflective filter 9-4 to be reflected and deflected by 90° in the transmission direction. The reflected light transmission direction is parallel to an axial direction of the optical fiber ferrule 9-7, and the emitted light is transmitted to the beam splitting filter 9-5 for transmission, and then further transmitted and converged on the optical fiber ferrule 9-7, before finally getting out of the optical assembly.

The optical receiver 9-3 includes an electrical signal pin, an optical detector chip, an electrical signal amplifier and a focusing lens therein, which are configured to convert a received optical signal from the outside into a received electrical signal and transmit the received electrical signal. Optionally, the optical receiver 9-3 is packaged by TO-CAN.

The received light entering the interior of the optical assembly through the optical fiber ferrule 9-7is transmitted to the beam splitting filter 9-5 to be reflected and deflected by 90° in the light transmission direction. The reflected received light is further transmitted to the receiving filter to be filtered, where the desired receiving wavelength is transmitted and other undesired wavelengths are reflected. The transmitted received light, after being adjusted by the optical path length adjuster in the optical path and converged by the lens of the optical receiver, is absorbed by the optical detector and converted into a received electrical signal which, after being amplified by the electrical signal amplifier, is transmitted out of the optical assembly via the electrical signal pin.

For the specific operation process of the optical path length adjuster described above, reference may be made to optional embodiment 1. Besides, the transmission processes of the emitted light and the received light in the optical module are similar to that of the related art, which can be easily understood by those skilled in the art, and thus will not be described in detail here.

In production, a proper thickness of the optical path length adjuster is selected according to the focal lengths of focusing lenses of the optical transmitter and the optical receiver, the reflective filter, the beam splitting filter, the receiving filter and the optical path length adjuster are fixed on the corresponding brackets respectively, the coupling optical transmitter and the optical fiber ferrule are coupled and respectively fixed, and the optical receiver is coupled so that the bases of the optical transmitter and the optical receiver are located in the same plane.

### Optional embodiment 3

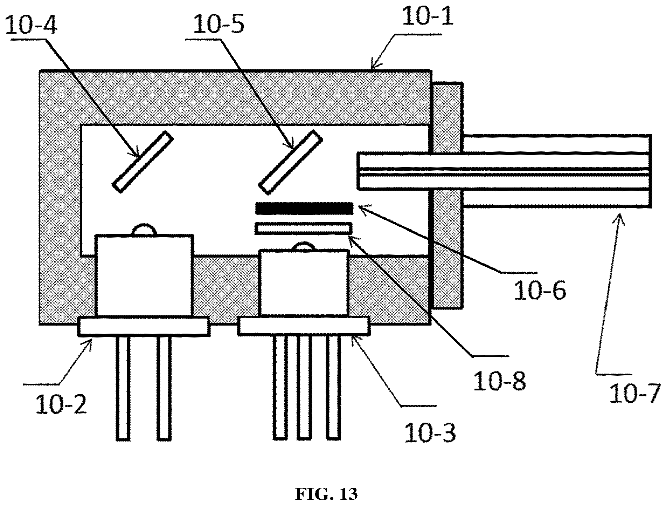

An implementation of optional embodiment 3 of the present disclosure is as shown in FIG. 13, which includes an optical assembly housing 10-1, an optical transmitter 10-2, an optical receiver 10-3, a reflective filter 10-4, a beam splitting filter 10-5, an optical path length adjuster 10-6 and an optical fiber ferrule 10-7. In order to isolate interference of external interference light on the received signal to achieve a better receiving effect, the implementation of the present disclosure may further include a receiving filter 10-8. The structure of each component in the optical assembly housing 10-1 is the same as that of optional embodiment 2, except that the positions of the brackets in the optical assembly housing 10-1 are changed according to the arrangement positions of a plurality of components.

Different from optional embodiment 2, the positions of the receiving filter 10-8 and the optical path length adjuster 10-6 are interchanged, and the transmission process of the received light changes correspondingly. The received light, after entering the interior of the optical assembly through the optical fiber ferrule 10-7 and being transmitted to the beam splitting filter 10-5 to be reflected, is adjusted by the optical path length adjuster in the optical path, and filtered by the receiving filter. The desired receiving wavelength is transmitted and other undesired wavelengths are reflected. The transmitted received light, after being converged by the lens of the optical receiver, is absorbed and converted into a received electrical signal by the optical detector, and the received electrical signal is amplified by the electrical signal amplifier, and then transmitted out of the optical assembly via the signal pin.

Other implementations of this optional embodiment 3 are the same as that of optional embodiment 2 and will not be described in detail here.

### Optional embodiment 4

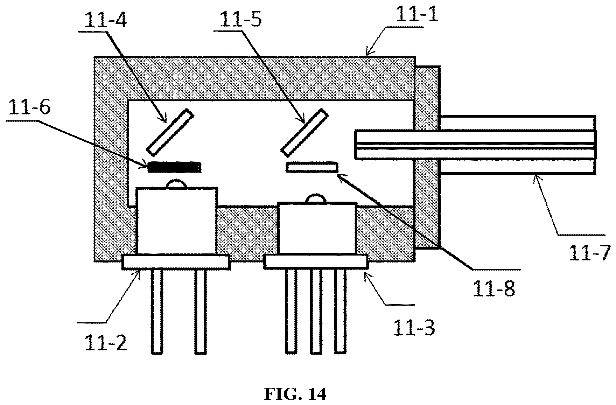

the optional embodiment 4 of the present disclosure is as shown in FIG. 14, which includes an optical assembly housing 11-1, an optical transmitter 11-2, an optical receiver 11-3, a reflective filter 11-4, a beam splitting filter 11-5, an optical path length adjuster 11-6 and an optical fiber ferrule 9-7. In order to isolate interference of external interference light on the received signal to achieve a better receiving effect, the implementation of the present disclosure may further include a receiving filter 11-8. The structure of each component in the optical assembly housing 11-1 is the same as that of optional embodiment 2, except that the positions of the brackets in the optical assembly housing 10-1 are changed according to the arrangement positions of a plurality of components.

Different from optional embodiment 2, the optical path length adjuster is located on the transmission optical path, the emitted optical signal, after being adjusted by the optical path length adjuster 11-6 in the optical path, is reflected by the reflective filter 11-4 so that the transmission direction thereof is deflected to be parallel to the axial direction of the optical fiber ferrule 11-7, transmitted by the beam splitting filter 11-5, and then converged on the optical fiber ferrule 11-7 to be transmitted outside of the optical assembly.

The received light entering the interior of the optical assembly through the optical fiber ferrule 11-7 is transmitted to the beam splitting filter 11-5 to be reflected so that the transmission direction thereof is deflected to a perpendicular direction of the optical fiber ferrule 11-7. The received light is further transmitted to the receiving filter 11-8 to be filtered, where the desired receiving wavelength is transmitted and other undesired wavelengths are reflected. The transmitted received light, after being converged by the lens of the optical receiver 11-3, is focused on the optical detector to be converted into a received electrical signal, and the received electrical signal is amplified by the electrical signal amplifier, and then transmitted out of the optical assembly via the signal pin.

The principle of adjusting the transmission optical path by the optical path length adjuster is similar to that of adjusting the reception optical path, and can be understood by referring to optional embodiment 1, which is easy for those skilled in the art and thus will not be described in detail here.

In the design of the optical assembly according to this optional embodiment, a position of the optical receiver for getting the received light converged on the optical detector in the optical receiver is calculated according to the maximum and minimum focal lengths of the focusing lens of the optical receiver and the position of the optical fiber ferrule. Since the bases of the optical transmitter and the optical receiver are located in the same plane, the position of the optical transmitter is also indirectly determined. In order to converge the emitted light into the optical fiber ferrule, the optical path of the emitted light to be adjusted is determined according to the focal length of the focusing lens of the optical transmitter, the position of the optical transmitter and the position of the optical fiber ferrule, thereby determining the required thickness of the optical path length adjuster.

In production, various thicknesses of optical path length adjusters may be configured according to the requirement of the target coupling efficiency. A proper thickness of the optical path length adjuster is selected according to the focal lengths of the optical transmitter and the optical receiver, the reflective filter, the beam splitting filter, the receiving filter and the optical path length adjuster are fixed on the corresponding brackets respectively, the coupling optical transmitter and the optical fiber ferrule are coupled and respectively fixed, and the optical receiver is coupled so that the bases of the optical transmitter and the optical receiver are located in the same plane.

Other implementations of this optional embodiment are the same as that of optional embodiment 2 and will not be described in detail here.

### Optional embodiment 5

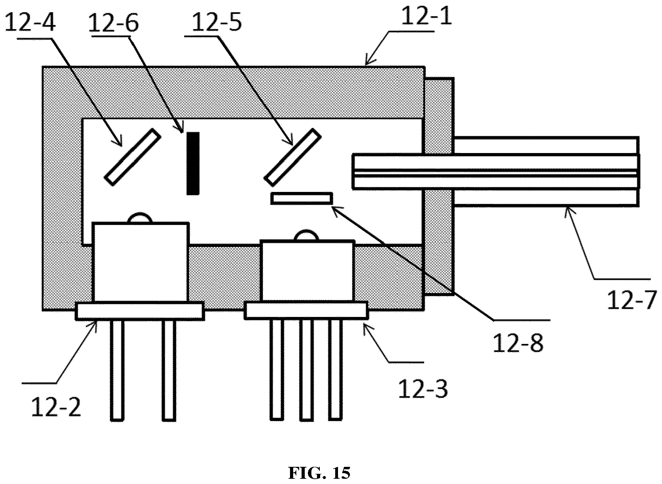

Optional embodiment 5 of the present disclosure is shown in FIG. 15, which includes: an optical assembly housing 12-1, an optical transmitter 12-2, an optical receiver 12-3, a reflective filter 12-4, a beam splitting filter 12-5, an optical path length adjuster 12-6 and an optical fiber ferrule 12-7. In order to isolate interference of external interference light on the received signal to achieve a better receiving effect, the implementation of the present disclosure may further include a receiving filter 12-8. The structure of each component in the optical assembly housing is the same as that of optional embodiment 4, except that the positions of the brackets in the optical assembly housing are changed according to the arrangement positions of a plurality of components.

Different from optional embodiment 4, the optical path length adjuster is positioned between the reflective filter and the beam splitting filter, the emitted optical signal, after being reflected by the reflective filter 12-4 so that the transmission direction thereof is deflected to be parallel to the axial direction of the optical fiber ferrule 12-7, is adjusted by the optical path length adjuster 12-6 in the optical path, transmitted by the beam splitting filter 12-5, and then converged on the optical fiber ferrule 12-7 to be transmitted outside of the optical assembly.

Other implementations are the same as that of optional embodiment 4 and will not be described in detail here.

### Optional embodiment 6

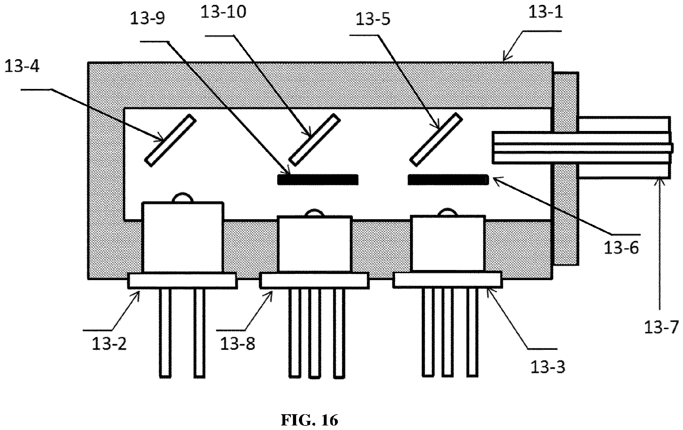

The technical solution of the disclosure may be also applicable to other optical assemblies such as a single-fiber three-way optical assembly or a single-fiber four-way optical assembly∘ Taking a single-fiber three-way optical assembly including two optical receivers and one optical transmitter as an example, the implementation thereof is as shown in FIG. 16, which includes an optical assembly housing 13-1, an optical transmitter 13-2, a first optical receiver 13-3, a first beam splitting filter 13-5, a first optical path length adjuster 13-6, a second optical receiver 13-8, a second beam splitting filter 13-10, a second optical path length adjuster 13-9, a reflective filter 13-4 and an optical fiber ferrule 13-7.

Different from optional embodiment 2, this implementation includes a further optical receiver and corresponding beam splitting filter and optical path length adjuster thereof, which is equivalent to a simple superposition based on optional embodiment 2, and the specific implementation thereof can be analogized according to optional embodiment 2. This is easy for those skilled in the art, and thus is not described in detail here.

Optionally, for other types of single-fiber three-way or single-fiber four-way optical assemblies, simple combination or deduction may be performed in a similar manner, such as increasing the number of optical transmitters and optical receivers, packaging some of the optical transmitters and optical receivers on other faces of the optical assembly, adding optical filters on the reception optical path, and the like, which should be considered as in the protection scope of the present disclosure.

Based on the technical solutions of optional embodiment 1 to optional embodiment 6, the optical transmitter is configured to convert the transmitted electrical signal into a transmitted optical signal which is converged by the lens on the optical transmitter and incident on the reflective filter to be reflected so that the optical path direction thereof is converted into the axial direction of the optical fiber ferrule, and then incident on to the beam splitting filter to be transmitted and converged on the optical fiber ferrule, before getting out of the optical assembly. In the above optional embodiment 4, after being converged by the lens, the emitted optical signal is further adjusted by the optical path length adjuster in the optical path. In optional embodiment 5, after being reflected by the reflective filter, the emitted optical signal is adjusted by the optical path length adjuster in the optical path.

The optical receiver is configured to convert the received optical signal into a received electrical signal. The received optical signal is transmitted into the optical assembly through the optical fiber ferrule, reflected by the beam splitting filter so that the optical path direction thereof is converted into the perpendicular direction of the optical fiber ferrule, and then converged by the lens on the optical receiver and focused into the optical receiver to be converted into a received electrical signal. In the above optional embodiments 2 to 3, after being reflected by the beam splitting filter, the received optical signal is adjusted by the optical path length adjuster in the optical path, and then enters the optical receiver.

The above optional embodiments of the disclosure use an optical path length adjuster to adjust the transmission optical path or the reception optical path, and adjust the bases of the optical transmitter and the optical receiver to the same plane so that there is no extra residual pin in the on-board design of the transmission pin and reception pin of the optical assembly, and no extra signal loss is involved. According to the above technical solution, in the on-board design of single-fiber bidirectional optical assembly, the optical assembly may be connected to a single board by means of connection mode of pin-direct connection, in which the optical transmitter and the optical receiver can both be connected to the single board in a manner of direct insertion, and bases of the optical transmitter and the optical receiver are both closely attached to the single board. Compared with the solution using a flexible circuit board, this solution shortens the pin lengths of the optical transmitter and the optical receiver, reduces the signal loss and improves the signal quality, and, with the optical assembly fixed by welding the pins, no extra positioning and fixing structures or processes are required, thereby reducing the complexity of production, improving the production efficiency, and finally achieving the purpose of cost reduction.

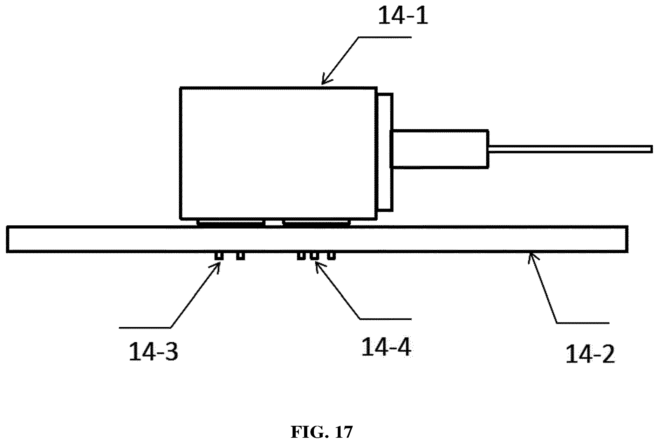

In summary, a connection mode using the on-board design of the single-fiber bidirectional optical assembly of the disclosure is as shown in FIG. 17, in which the optical assembly 14-1 and the single board 14-2 are connected through the optical transmitter 14-3 and the optical receiver 14-4 in a manner of direct insertion of pins, which greatly shortens the pin length of the transmitting end, reduces the signal loss and improves the transmission quality of the emitted signal. Meanwhile, since the optical assembly is connected to the single board by directly inserted pins, the optical assembly can be fixed by welding the pins so that no extra fixing device is needed, the production process is simplified and the difficulty is reduced.

### Embodiment 5

In an embodiment of the present disclosure, there is further provided a storage medium including a program stored thereon, wherein the program, when executed, causes the method of any one of the above embodiments to be implemented.

Optionally, in this embodiment, the storage medium may also be configured to store a program code for performing the steps of:
S1, adjusting, by an optical path length adjuster, a coupling position of the optical transmitter and a coupling position of the optical receiver such that a base of the optical transmitter and a base of the optical receiver are located in the same plane, and signal pins of the optical transmitter and the optical receiver are both oriented in a direction perpendicular to the plane;
wherein the optical path length adjuster is disposed in an optical assembly, and the optical assembly further includes the optical transmitter and the optical receiver.

Optionally, in this embodiment, the storage medium may include, but is not limited to: a Universal Serial Bus flash disk (usb disk), a Read-Only Memory (ROM), a Random Access Memory (RAM), a removable hard disk, a magnetic disk, or an optical disk, and other media capable of storing program codes.

Optionally, specific examples in the present embodiment may refer to the examples described in the foregoing embodiments and alternative implementations, which will not be repeated in the present embodiment.

Obviously, a person skilled in the art would understand that the above modules and steps of the present disclosure can be realized by using a universal computing device, can be integrated in a single computing device or distributed on a network that consists of a plurality of computing devices,; and alternatively, they can be realized by using the executable program code of the computing device, so that they can be stored in a storage device and executed by the computing device, in some cases, can perform the shown or described steps in a sequence other than herein, or they are made into various integrated circuit modules respectively, or a plurality of modules or steps thereof are made into a single integrated circuit module, thus to be realized. As such, the present disclosure is not limited to any particular combination of hardware and software.

## Claims

1. An optical assembly, comprising: an optical path length adjuster, an optical transmitter, an optical receiver, and an optical assembly housing, wherein
the optical path length adjuster is configured to adjust a coupling position of the optical transmitter and a coupling position of the optical receiver such that a base of the optical transmitter and a base of the optical receiver are located in the same plane, and signal pins of the optical transmitter and the optical receiver are both oriented in a direction perpendicular to the plane.

2. The optical assembly according to claim 1, further comprising: a beam splitting filter, a reflective filter and an optical fiber ferrule, wherein the optical path length adjuster is disposed at at least one of the following positions:
a position in a perpendicular direction of the optical fiber ferrule and between the beam splitting filter and the optical receiver;
a position in a perpendicular direction of the optical fiber ferrule and between the reflective filter and the optical transmitter; and
a position in an axial direction to the optical fiber ferrule and between the reflective filter and the beam splitting filter;
wherein both the beam splitting filter and the reflective filter are located in the axial direction of the optical fiber ferrule and form a preset angle with an axis of the optical fiber ferrule.

3. The optical assembly according to claim 1 or 2, wherein the optical path length adjuster satisfies at least one of the following conditions: the optical path length adjuster has a refractive index larger than that of a gas in an interior space of the optical assembly; and the optical path length adjuster is a planar structure.

4. A method for adjusting coupling positions, comprising:
adjusting, by an optical path length adjuster, a coupling position of the optical transmitter and a coupling position of the optical receiver such that a base of the optical transmitter and a base of the optical receiver are located in the same plane, and signal pins of the optical transmitter and the optical receiver are both oriented in a direction perpendicular to the plane;
wherein the optical path length adjuster is disposed in an optical assembly, and the optical assembly further comprises the optical transmitter and the optical receiver.

5. The method according to claim 4, wherein the step of adjusting, by the optical path length adjuster, the coupling position of the optical transmitter and the coupling position of the optical receiver comprises:
adjusting, by the optical path length adjuster, an angle at which a light beam passes through the optical path length adjuster, wherein the coupling position of the optical transmitter and the coupling position of the optical receiver are adjusted by adjusting the angle.

6. The method according to claim 4, wherein the optical path length adjuster is disposed inside the optical assembly in a manner comprising at least one of:
the optical path length adjuster is disposed between the beam splitting filter and the optical receiver of the optical assembly, and is located in a perpendicular direction of the optical fiber ferrule;
the optical path length adjuster is disposed between the reflective filter and the optical transmitter of the optical assembly, and is located in the perpendicular direction of the optical fiber ferrule; and
the optical path length adjuster is disposed between the reflective filter and the beam splitting filter of the optical assembly, and is located in an axial direction of the optical fiber ferrule;
wherein both the beam splitting filter and the reflective filter are located in the axial direction of the optical fiber ferrule and form a preset angle with an axis of the optical fiber ferrule.

7. A device for adjusting coupling positions, comprising:
an adjusting module configured to adjust a coupling position of the optical transmitter and a coupling position of the optical receiver such that a base of the optical transmitter and a base of the optical receiver are located in the same plane, and signal pins of the optical transmitter and the optical receiver are both oriented in a direction perpendicular to the plane;
wherein the optical path length adjuster is disposed in an optical assembly, and the optical assembly further comprises the optical transmitter and the optical receiver.

8. The device according to claim 7, wherein the adjusting module is configured to adjust an angle at which a light beam passes through the optical path length adjuster, wherein the coupling position of the optical transmitter and the coupling position of the optical receiver are adjusted by adjusting the angle.

9. The device according to claim 7, wherein the optical path length adjuster is configured in at least one of the following manners:
the optical path length adjuster is disposed between the beam splitting filter and the optical receiver of the optical assembly, and is located in a perpendicular direction of the optical fiber ferrule;
the optical path length adjuster is disposed between the reflective filter and the optical transmitter of the optical assembly, and is located in the perpendicular direction of the optical fiber ferrule; and
the optical path length adjuster disposed between the reflective filter and the beam splitting filter of the optical assembly and is located in an axial direction of the optical fiber ferrule;
wherein both the beam splitting filter and the reflective filter are located in the axial direction of the optical fiber ferrule and form a preset angle with an axis of the optical fiber ferrule.

10. A storage medium having a computer program stored thereon, wherein the computer program is configured to be executed to cause the method according to any one of claims 4 to 6 to be implemented.

11. A single board connected to the optical assembly according to any one of claims 1 to 3.
